# NEUE EUROPÄISCHE PATENTSCHRIFT

(11) **EP 0 143 175 B2**
(45) Veröffentlichungstag und Bekanntmachung des Hinweises auf die Entscheidung über den Einspruch: **10.04.1996**
(45) Hinweis auf die Patenterteilung: 14.01.1987
(21) Anmeldenummer: 84109152.3
(22) Anmeldetag: 02.08.1984
(51) Int. Cl.: C08L 33/26, C08J 3/02, D06M 15/29

(54) **Formaldehydfreie wässrige Kunststoffdispersionen auf Basis eines vernetzbaren Polymerisats, Verfahren zu ihrer Herstellung und ihre Verwendung**
Cross-linkable resinous aqueous dispersions not containing formaldehyde, method for their preparation and their application
Dispersions aqueuses exemptes de formaldéhyde à base de polymère réticulable, procédé de préparation et leur application

(30) Priorität: 06.08.1983 DE 3328456
(43) Veröffentlichungstag der Anmeldung: 05.06.1985
(73) Patentinhaber: HOECHST AKTIENGESELLSCHAFT, D-65926 Frankfurt am Main (DE)
(72) Erfinder: Harréus, Albrecht, Dr., D-6233 Kelkheim (Taunus) (DE); Müller, Eberhard, verstorben (DE)

(56) Entgegenhaltungen:
- EP-A- 0 080 635
- FR-A- 1 460 214
- GB-A- 2 086 929
- US-A- 3 220 869
- CHEMICAL ABSTRACTS, Band 80, 1974, Seiten 72,73, Nr. 109813v, Columbus, Ohio, USA;
- Textile Chemists and Colorist, Vol. 12, No. 12, 1980, Seiten 24/311-29/316, R.S. Perriy et al. "A Search for Potential Formaldehyde Acceptors"
- Produktinformation der BASF AG, Ludwigshafen: Sortimentsübersicht "Polymerdispersionen, Teil I, Acronal-Marken", November 1976

## Beschreibung

Die Erfindung betrifft lagerungsstabile wäßrige Kunststoffdispersionen auf Basis eines vernetzbaren Polymerisats aus ethylenisch undesättigten Monomeren mit einem Gehalt an N-Methylolamid- und/oder N-Methyloletheramidgruppen, die eine cyclische Harnstoffverbindung, vorzugsweise Ethylenharnstoff, als Formaldehydacceptor enthalten, welcher in der Dispersion gegebenenfalls vorhandenen oder sich durch Abspaltung bildenden Formaldehyd praktisch vollständig bindet, so daß die Dispersionen ohne Beeinträchtigung der Vernetzbarkeit sowie auch die daraus hergestellten Polymerisatfilme weitgehend formaldehydfrei und damit physiologisch unbedenklich sind. Die Erfindung betrifft ferner ein Verfahren zur Herstellung der genannten formaldehydfreien Dispersionen sowie deren Verwendung.

Bei der Herstellung von Vliesstoffen für Einweg- bzw. Wegwerfartikel wie auch für Dauerartikel kommt, unabhängig vom Herstellungsverfahren, sowohl beim Einsatz natürlicher als auch synthetischer Fasern den Kunststoff-Dispersionen als Binder zur Erhöhung der mechanischen Beanspruchbarkeit und duch zur Verbesserung des Griffs besondere Bedeutung zu.

So wird für non wovens als Wegwerfartikel im Sanitär-, Hygiene- und Haushaltsbereich bei ausreichend guten Benetzungseigenschaften nach der Faserbehandlung mit ausrüstenden Mitteln eine hohe Naßreifestigkeit gefordert.

Es stehen weiterhin z.B. für die Bereiche Bekleidung, Haushalt, Hochbau und Automobilbau neben den Festigkeitseigenschaften der Vliesstoffe deren Reinigungsbeständigkeit gegenüber Wasser und Lösungsmitteln im Vordergrund.

Die geforderten mechanischen Eigenschaften wie auch die Reinigungsbeständigkeit können besonders günstig durch die Anwendung von Kunststoff-Dispersionen mit vernetzenden Gruppen realisiert werden. Die Vernetzung der Kunststoff-Dispersionen. gegebenenfalls vorteilhaft in Gegenwart von Katalysatoren, wie z.B. Säuren oder Salzen, führt zu einer dreidimensionalen Molekülvergrößerung bei den Polymerisatbestandteilen,was größere Widerstandsfähigkeit der Produkte gegenüber mechanischer Belastung und höhere Unempfindlichkeit bei der Behandlung mit Wasser und Lösungsmitteln bedeutet.

Bei den hierfür infrage kommenden Kunststoff-Dispersionen handelt es sich vorwiegend um Polymerisate auf der Basis von Vinylacetat, vinylpropionat, Acrylsäureestern, Ethylen, Styrol, verzweigten aliphatischen Carbonsäurevinylestern (vorzugsweise mit Carbonsäureresten von 4-18 C-Atomen), Vinylchlorid, Acrylamid, Acrylsäure, Acrylnitril. Methacrylsäure, Methacrylamid und ähnlichen ethylenisch ungesättigten Monomeren, wobei zum Aufbau der gewünschten Polymerisateigenschaften vorzugsweise copolymere Kombinationen der angeführten Monomeren mit solchen Comonomeren, die zu Vernetzungsreaktionen befähigte Gruppen enthalten, Verwendung finden.

Als Vernetzer kommen vorwiegend methylolgruppenhaltige Komponenten infrage. Besonders geeignet sind dabei Polymerisatanteile mit Grundmoleküleinheiten aus N-Methylolderivaten ungesättigter organischer Säureamide, wie z.B. N-Methylolacrylamid (NMAA) und/oder deren Alkyl- oder Arylether, wie z.B. N-(iso-Butoxy-methylol)-acrylamid (IBMA), Vernetzer dieser Art haben jedoch die Eigenschaft, sofern sie in situ freie Methylolgruppen enthalten oder solche durch Spaltung aus ihren Derivaten in wäßrig saurem Medium gebildet werden, in geringem Umfang Formaldehyd abzuspalten, wobei sich ein Guleichgewicht einstellt, das sehr stark auf der Seite der im Polymerisat eingebauten Methylolgruppe liegt Die Vernetzung des Dispersionspolymerisates über die Methylolgruppen erfolgt während und nach Verdunstung des Wassers in einem Temperaturbereich von 80 bis 250°C, vorzugsweise 120 bis 180 C, und hängt ab von der Dauer der Temperatureinwirkung und der zu erzielenden Substrattemperatur. Der Polymerisatfilm nach der Vernetzung ist ebenso wie die Ausgangsdispersion praktisch frei von Formaldehyd. Die genannten methylolgruppenhaltigen Vernetzerkomponenten haben vor allem den Vorteil, daß sie bei den vernetzten Polymerisaten zu den gewünschten Verbesserungen bezüglich der mechanischen Eigenschaften von Filmen und Beschichtungen sowie zu deren Lösungsmittelbestandigkeit führen, ohne daß dadurch der durch den makromolekularen Aufbau des Polymerisats bedingte Eigenschaftscharakter bei dem Vernetzungsprodukt verloren geht. So werden die Eigenschaften von mit solchermaßen vernetzten Dispersionspolymerisaten ausgerüsteten Vliesstoffen, wie z.B. weicher/harter Griff, Benetzungsfähigkeit, Verformbarkeit, Siegelfähigkeit usw. nur unerheblich beeinflußt. Von Nachteil ist jedoch der durch die Einstellung des Gleichgewichts in wäßriger Phase sich, wenn auch nur in sehr geringer Menge, bildende Anteil an freiem Formaldehyd, der wegen seines Geruchs und der Reizwirkung auf Augen und Schleimhäute schon in sehr geringer Konzentration wahrgenommen werden kann und somit bei der Herstellung von Vliesstoffen aller Art u.a. insbesondere aus toxikologischen Gründen beachtet werden muß. Darüber hinaus besteht für die Verwendung von Bindemittelsystemen zur Herstellung von Vliesstoffen für den Sanitär- und Hygienebereich in Teilsektoren der Anwendung die Auflage, daß nur formaldehydfreie Kunststoff-Dispersionssysteme verwendet werden dürfen.

Ziel der vorliegenden Erfindung war es somit, ein Kunststoff-Dispersionssystem aufzubauen, das die bekannten für die Bindung von non wovens charakteristischen Basiseigenschaften mit gutem vernetzenden Charakter besitzt, aber den durch die im Polymerisat eingebauten Methylolgruppen durch Gleichgewichtseinstellung in wäßriger Phase bedingten Anteil an freiem Formaldehyd in situ bzw. bei Verfilmung in statu nascendi an eine reaktionsfähige Komponente bindet. Die Mischung soll Stabil, lagerungsfähig und wie Standardkunstharz-Dispersionen nach den verschiedenen Verfahren der Vliesstoffverfestigung verarbeitbar sein. Darüber hinaus soll die Reaktivität bezüglich der Vernetzung sowie der Formaldehydbindung bei den für Kunststoff-Dispersionen üblichen Lagerungs- und Verarbeitungsbedingungen erhalten bleiben.

Zur Reduzierung des Gehaltes an freiem Formaldehyd werden bei der Ausrüstung von Vliesstoffen für den technischen wie auch für den Hygienebereich den vernetzbaren wäßrigen Kunststoffdispersionen bei deren Anwendung üblicherweise bereits reaktionsfähige Komponenten wie Harnstoff, Thioharnstoff, Melamin und andere zugesetzt Aus Gründen der Verträglichkeit und Reaktivität werden diese Zusatzstoffe dem Gesamtsystem aber ürst unmittelbar vor der Verarbeitung zuzugeben und scheiden darüber hinaus in vielen Fällen wegen Nichterfüllung des komplexen Anforderungsspektrums für Vliesbinder aus.

Für den Einsatz in Kunststoff-Dispersionen, die für die Bindung von Vliesstoffen für den Hygiene- und Sanitärbereich eingesetzt werden, müssen diese Zusatzstoffe ebenso wie das Polymerisat den gestellten physiologischen Anforderungen entsprechen und sollten außerdem in Wasser löslich oder dispergierbar sein.

Es wurde nun überraschenderweise gefunden, daß wäßrige Kunststoffdispersionen mit Gehalten an N-Methylol-Gruppen sowie auch die daraus gewonnenen Polymerisatfilme weitgehend formaldehydfrei erhalten werden können, wenn man den Dispersionen Harnstoffderivate, insbesondere cyclische Harnstoffverbindungen, vorzugsweise Ethylenharnstoff (- Imida-zolidin-2-on) zusetzt. Die Bindung von Formaldehyd erfolgt durch die Überführung der erfindungsgemäß zugesetzen Harnstoffverbindungen in deren N- bzw. N'-Methylolverbindungen, wobei das Reaktionsgleichgewicht In wäßrig-saurer Phase praktisch vollständig auf der Seite der N- bzw. N'-Methylolverbindung liegt.

Aus der Europäischen Patentanmeldungsschrift Nr. 0 O43 036/A1 war bereits bekannt, daß Ethylenharnstoff als Zusatz bei der Härtung von säurehärtenden Alkydharz-Harnstoffharz-Kombinationen zur Verringerung der auftretenden Emission von Formaldehyd verwendet werden kann. Die Zugabe des Ethylenhamstoffs erfolgt dabei aber unmittelbar vor der Verarbeitung des Lackes, vorzugsweise gleichzeitig mit dem Säurekatalysator, und stellt somit ein sogenanntes Zwei-Topfsystem in nichtwäßriger, organischer Lösung dar. Als säurehärtende plastifizierte Harnstoff/Formaldehydharz-Komponente wird dabei zur Herstellung von Ein- oder Zweikomponentenlacken für die industrielle Oberflächenveredlung von Holz und Holzwerkstoffen eine handelsübliche 60 gew.-%ige Harzlösung in Ethanol/Butanol verwendet.

Gegenstand der vorliegenden Erfindung sind nun formaldehydfreie waßrige Kunststoffdispersionen auf Basis eines vernetzbaren Polymerisats aus ethylenisch ungesättigten Monomeren mit einem Gehalt an N-Methylolamid- und/oder N-Methyloletheramidgruppën, dadurch gekennzeichnet, daß die Dispersionen eine Verbindung der Formel I, 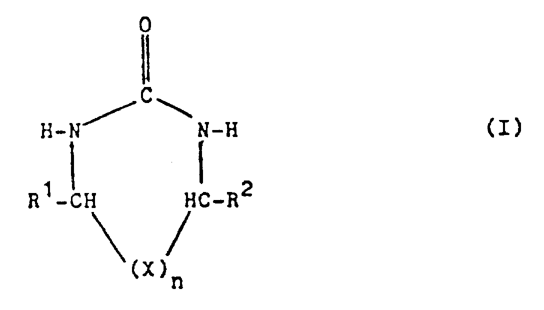 worin n = 0 oder 1,
X = Sauerstoff, -CH₂-, -CH(R)- oder -N(R)-, wobei R für (C₁-C₄)-Alkyl oder (C₁-C₄)-Alkylol steht, und
R¹, R - H oder OH bedeutet,
enthalten,
daß sie übliche Säuren und/oder Säurespender enthalten und ihr Feststoffgehalt 15 bis 65 Gew.-%, bezogen auf die wäßrige Dispersion, beträgt, daß das vernetzbare Polymerisat übliche Grundmoleküleinheiten mit zur Vernetzung fähigen N-Methylolamid- und/oder N-Methyloletheramidgruppen enthält und daß das vernetzbare Polymerisat N-Methylolacrylamideinheiten und/oder N-(Isobutoxymethyl)acrylamidein-heiten als zur Vernetzung fähige Komponente enthält.

Die Dispersionen enthalten vorzugsweise organische Säuren und/oder organische Säurespenderund der pH-Wert der Dispersionen liegt vorzugsweise im sauren Bereich, insbesondere bei pH 1,5 bis 6. Der Feststoffgehalt der Dispersionen insbesondere bei 30 bis 55 Gew.-%.

Der Gehalt an Verbindungen der Formel I muß mindestens der zu bindenden Formaldehydmenge äquivalent sein. Vorzugsweise beträgt er 0,15 bis 6 Gew.-%, insbesondere 0,3 bis 3 Gew.-%, bezogen auf die Dispersion.

Eine besonders bevorzugte Verbindung der Formel I ist das als Ethylenharnstoff bekannte Imidazolidin-2-on.

Weitere Verbindungen der Formel I sind z.B. Dihydroxyethylenharnstoff, Propylenhamstoff, Triazinone, Urone.

Bevorzugt sind ferner solche vernetzbaren Kunststoffdispersionen, deren Polymerisatanteil übliche Grundmoleküleinheiten von ethylenisch ungesättigten Monomeren aus der Gruppe Vinylacetat, Vinylpropionat, Acrylsäureester, Maieinsäuremonoester, Maleinsäurediester, Styrol, Ethylen, Vinylester langkettiger linearer oder verzweigter Carbonsäuren, Vinylchlorid, Acrylamid, Acrylsäure, Acrylnitril, Methacrylsäure, Methacrylamid, deren mögliche Kombinationen zu Copolymerisaten oder Terpolymerisaten sowie übliche Grundmoleküleinheiten mit zur Vernetzung fähigen N-Methylolamidund/oder N-Methyloletheramidgruppen enthält.

Der Gehalt an Grundmoleküleinheiten mit den zur Vernetzung fähigen N-Methylolamid- und/oder N-Methyloletheramidgruppen in dem Polymerisatanteil der Dispersionen ist nicht kritisch und kann alle bei vernetzbaren Kunststoffdispersionen üblichen Werte annehmen. Vorzugsweise beträgt er jedoch 0,2 bis 6 Gew.-%, insbesondere 1,5 bis 4 Gew.-%, bezogen auf das Polymerisat.

Eine Grundmoleküleinheit mit einer zur Vernetzung fähigen N-Methylolamidgruppe ist diejenige des N-Methylolacrylamids und/oder der Methylolisobutylether des N-Methylolacrylamids.

Weiterer Gegenstand der Erfindung ist ein Verfahren zur Herstellung der vorstehend beschriebenen formaldehydfreien wäßrigen Kunststoffdispersionen auf Basis eines vernetzbaren Polymerisats aus ethylenisch ungesättigten Monomeren mit einem Gehalt an N-Methylolamid- und/oder N-Methyloletheramidgruppen, das dadurch gekennzeichnet ist, daß man in üblicher Weise hergestellte wäßrige, vernetzbare und N-Methylolamid- und/oder N-Methyloletheramidgruppen enthaltende Polymerisatdispersionen mit einer Verbindung der Formel I vermischt.

Die Verbindungen der Formel I werden den Dispersionen bevorzugt als alkoholische Lösungen zugesetzt Besonders bevorzugt werden 20 bis 50 gew.-%ige, insbesondere 30 gew.-%ige Lösungen von Verbindungen der Formel I in Ethanol verwendet Überraschenderweise lassen sich die Verbindungen der Formel I völlig problemlos in die obengenannten vernetzbaren wäßrigen Polymerisatdispersionen einarbeiten. Die resultierenden erfindungsgemäßen Mischungen sind unter üblichen Lagerungsbedingungen bei Raumtemperatur über viele Monate stabil, auch in Gegenwart von üblichen organischen Säuren oder Säurespendern. Auch die Grundeigenschaften der Dispersionen, nämlich die Vernetzungsfähigkeit ihrer Polymerisatbestandteile und die Reaktivität gegenüber Formaldehyd, selbst bei Vorliegen oder nachträglicher Bildung des letzteren in geringsten Konzentrationen, bleiben dabei voll ernalten. Die Erhaltung dieses Eigenschaftsspektrums ist eine Grundvoraussetzung für die Verwendbarkeit der Verbindungen der Formel I als Modifizierungsmittel in vernetzbaren Kunststoffdispersionen zur Behandlung beispielsweise von non wovens. Besonders vorteilhafte Ergebnisse können durch den Zusatz von Ethylenharnstoff erhalten werden. So können z.B. durch den erfindungsgernäßen en Zusatz von Ethylenharnstoff der Gehalt an freiem Formaldehyd in N-Methylolgruppen enthaltenden vernetzbaren wäßrigen Kunststoffdispersionen bis an die Nachweisgrenze der üblichen Bestimmungsmethoden für Formaldehyd reduziert und auch während ggf. nachfolgenden Lagerungszeiten auf diesem reduzierten Niveau gehalten werden. Gleiches gilt für die aus den genannten erfindungsgemäßen Dispersionen hergestellten Filme und Beschichtungen vor und nach deren Temperaturbehandlung, wodurch eine praktisch formaldehydfreie Ausrüstung von Vliesstoffen jeglicher Art durch die Anwendung eines wäßrigen Ein-Topfsystems ermöglicht wird.

Obwohl die unter Mitverwendung erfindungsgemäßer Mengen von Ethylenharnstoff hergestellten Polymerisat-Filme bzw. Beschichtungen eine etwas höhere Hydrophilie vergleichsweise zu den ohne Ethylenharnstoffzusatz hergestellten Filmen oder Beschichtungen aufweisen, werden z.B. die Trocken- und insbesondere die Naßreißfestigkeiten von Filmen und Beschichtungen, die aus erfindungsgemäßen Dispersionen hergestellt wurden, überraschenderweise nicht negativ beeinflußt.

Zum Nachweis von Formaldehyd gibt es eine Reihe von Bestimmungsmethoden, deren Ergebnisse in ihrer absoluten Bewertung im allgemeinen nicht zueinander in Beziehung gesetzt werden können. Als z.Zt. aussagefähigste Nachweismethode für freien Formaldehyd in wäßrigen Dispersionen kann die Lutidin-Methode" angesehen werden. Nach dieser Methode wird der Formaldehyd mit Acetylaceton in Gegenwart von Ammoniak zu 3,5-Diacetyl-1,4-dihydrolutidin umgesetzt. Die intensität der dabei auftretenden gelben Färbung wird im Spektralphotometer gemessen. Die Methode zeichnet sich durch hohe Empfindlichkeit und geringe Störanfälligkeit aus.

Die Beurteilung der Filme wurde nach Lagerung der Proben in Anlehnung an Nr. 2 der BGA-Empfehlung XVIII für Melaminharzpressmassen in der 9. Mitteilung des BGA vom 1.8.78 über die "Gesundheitliche Beurteilung von Kunststoffen im Rahmen des Lebensmittelgesetzes" durchgeführt. Abweichend von dieser vorgegebenen Bestimmungsmethode wurden die Filme unter verschärften Bedingungen in destilliertem Wasser bei 40 C während 4 Stunden gelagert. Eine Zusammenfassung von Ergebnissen mit verschiedenen KunststoffDispersionssystemen nach der Lutidin-Methode und der Auswertung in Anlehnung an die BGA-Empfehlung XVIII ist in Tabelle 1 dargestellt.

In der Tabelle 2 sind die Naßreißfestigkeiten eines mit einer vernetzbaren Polymerisatdispersion ausgerüsteten Spezialpapiers in Abhängigkeit von Zusätzen an Ethylenharnstoff aufgezeigt, wobei den Werten nach der Temperaturbehandlung bei 150°C besondere Bedeutung zukommt, da bei 100°C die Aktivierungsenergie zur vollständigen Vernetzung methylolgruppenhaltiger Polymerisate häufig noch nicht in dem erforderlichen Ausmaß zur Verfügung steht.

Die erfindungsgemäßen, vernetzbaren wäßrigen Polymerisatdispersionen können zum physiologisch unbedenklichen Verkleben, Tränken, Verfestigen und Beschichten von Materialien verschiedenster Art, wie z.B. flächigen festen Körpern, Folien, Granulaten, Pulvern, Fasern, Fäden, Geweben, non wovens, Papier, verwendet werden. Ihr Einsatz erfolgt vorzugsweise zum physiologisch unbedenklichen Verfestigen von non wovens aus natürlichen, synthetischen oder mineralischen Fasern oder Fäden und deren Gemischen für den technischen Bereich sowie für die Sektoren Sanitär-, Haushalt- und Hygienevliesstoffe, ferner von Papier.

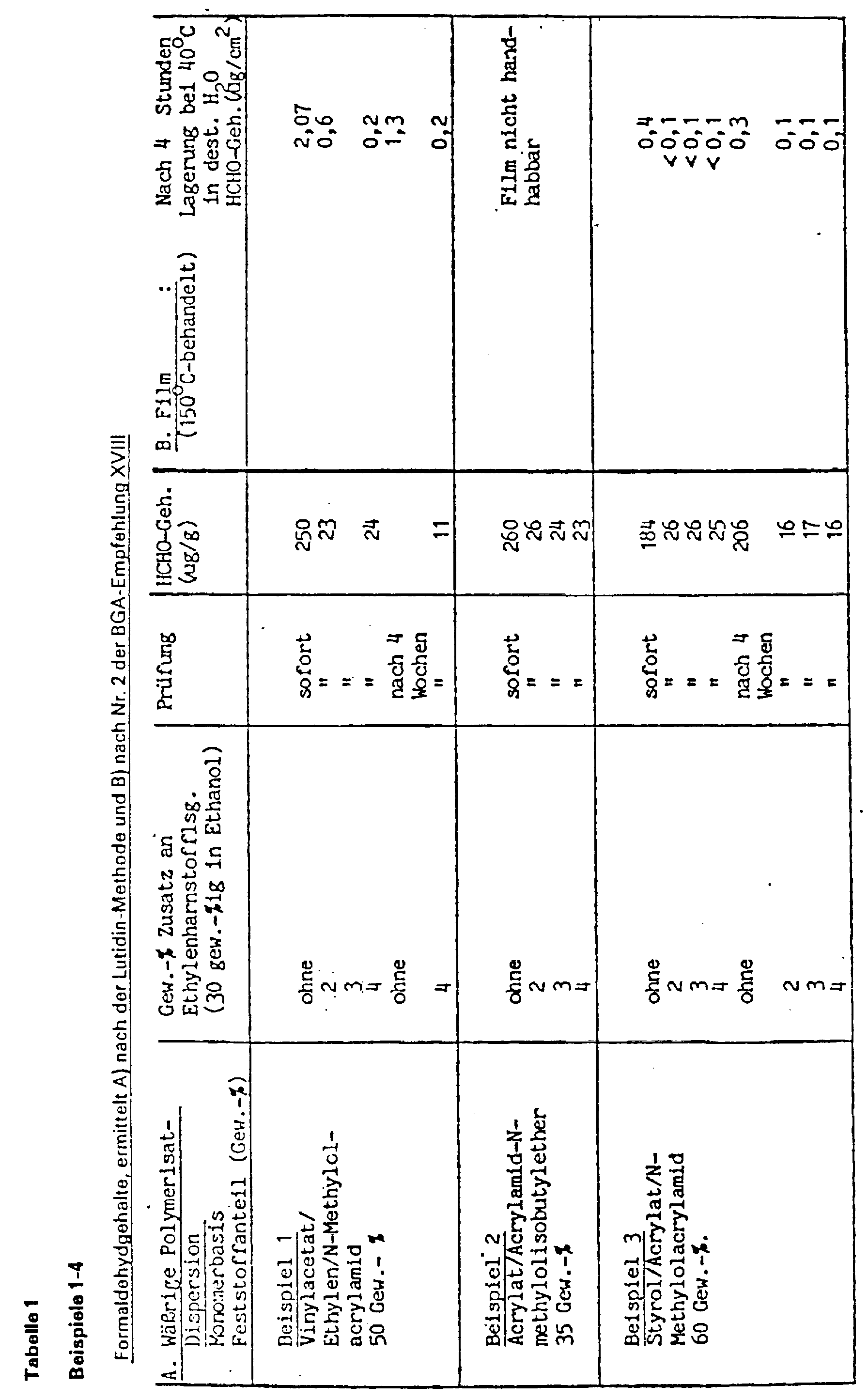

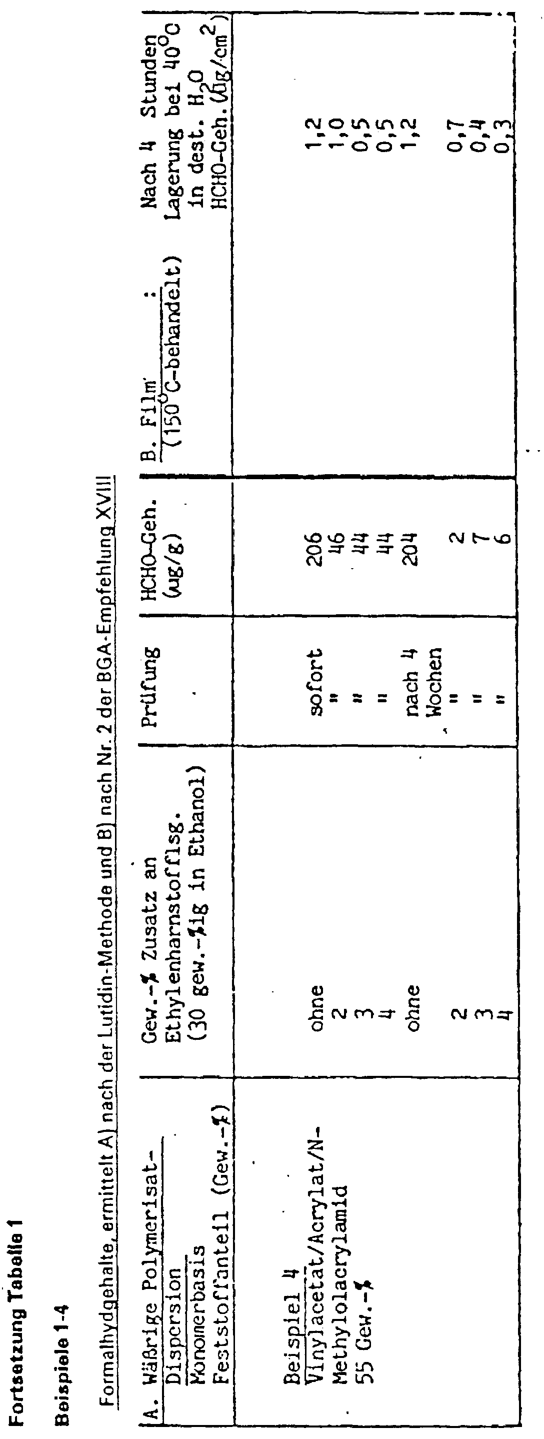

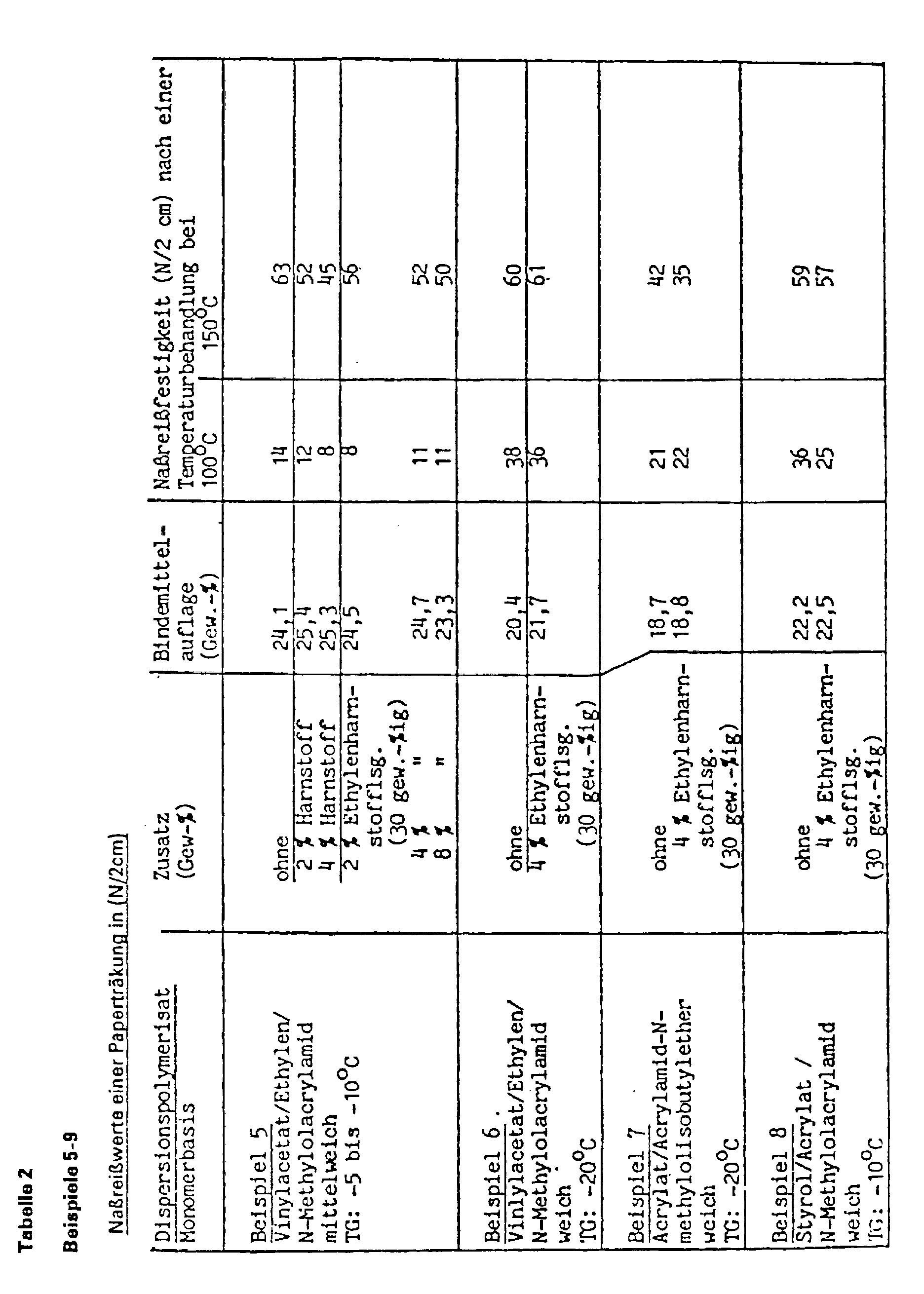

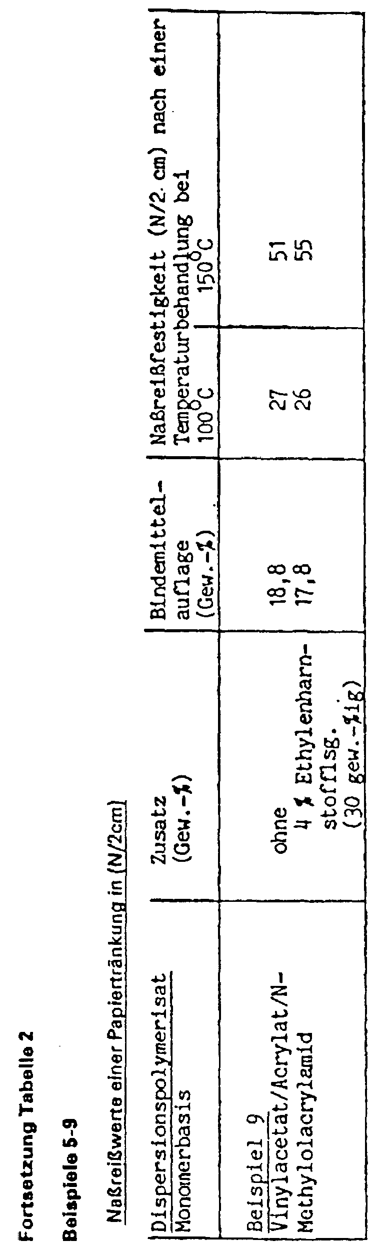

## Patentansprüche (Patentansprüche für folgende(n) Vertragsstaat(en): BE, CH, DE, FR, GB, IT, LI, NL, SE)

1. Formaldehydfreie wäßrige Kunststoffdispersionen auf Basis eines vernetzbaren Polymerisats aus ethylenisch ungesättigten Monomeren mit einem Gehalt an N-Methylolamid und/oder N-Methyloletheramidgruppen, dadurch gekennzeichnet, daß die Dispersionen bis 10 Gew.-%, bezogen auf die Dispersion, einer Verbindung der Formel I, 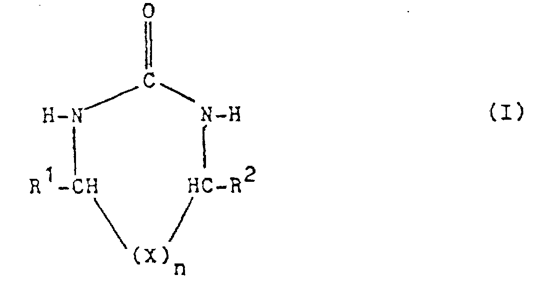
worin n = 0 oder 1,
X = Sauerstoff, -CH₂-, -CH(R)- oder -N(R)-, wobei R für (C₁-C₄)-Alkyl oder (C₁-C₄)- Alkylol steht,
und
R₁, R₂ = H oder OH bedeutet,
enthalten, daß sie übliche Säuren und/oder Säurespender enthalten und ihr Feststoffgehalt 15 bis 65 Gew.-%, bezogen auf die wäßrige Dispersion, beträgt, daß das vernetzbare Polymerisat übliche Grundmoleküleinheiten mit zur Vernetzung fähigen N-Methylolamid- und/oder N-Methyloletheramidgruppen enthält und daß das vernetzbare Polymerisat N-Methylolacrylamideinheiten und/oder N-(Isobutoxy-methyl)acrylamideinheiten als zur Vernetzung fähige Komponente enthält.

2. Kunststoffdispersionen nach Anspruch 1, dadurch gekennzeichnet, daß sie organische Säuren und/oder organische Säurespender enthalten.

3. Kunststoffdispersionen nach Anspruch 1 oder 2, dadurch gekennzeichnet, daß sie 0,15 bis 6 Gew.-%, bezogen auf die wäßrige Dispersion einer Verbindung der Formel 1 enthalten.

4. Kunststoffdispersionen nach Anspruch 1, 2 oder 3, dadurch gekennzeichnet, daß sie eine Verbindung der Formel I, in der n = 0 und R¹, R = H bedeuten, enthalten.

5. Kunststoffdispersionen nach Ansprüchen 1 bis 4, dadurch gekennzeichnet, daß das vernetzbare Polymerisat Grundmoleküleinheiten von ethylenisch ungesättigten Monomeren aus der Gruppe Vinylacetat, Vinylpropionat, Acrylsäureester, Maleinsäuremonoester, Maleinsäurediester, Styrol, Ethylen, Vinylester langkettiger linearer oder verzweigter Carbonsäuren, Vinylchlorid, Acrylamid, Acrylsäure, Acrylnitril, Methacrylsäure, Methacrylamid, deren mögliche Kombinationen zu Copolymerisaten oder Terpolymerisaten enthält.

6. Verfahren zur Herstellung von formaldehydfreien wäßrigen Kunststoff-dispersionen auf Basis eines vernetzbaren Polymerisats aus ethylenisch ungesättigten Monomeren mit einem Gehalt an N-Methylolamid- und/oder N-Methyloletheramidgruppen gemäß Ansprüchen 1 bis 5, dadurch gekennzeichnet, daß man in üblicher Weise hergestellte wäßrige vernetzbare und N-Methylolamid- und/oder N-Methyloletheramidgruppen enthaltende Polymerisatdispersionen mit einer Verbindung der Formel I vermischt.

7. Verfahren nach Anspruch 6, dadurch gekennzeichnet, daß man die Verbindung der Formel I als alkoholische Lösung zusetzt.

8. Verwendung der Polymerisatdispersion nach Ansprüchen 1 bis 5 zum Verkleben, Tränken, Verfestigen und Beschichten von Materialien verschiedenster Art.

9. Verwendung der Polymerisatdispersionen nach Ansprüchen 1 bis 5 zum Verfestigen von non wovens aus natürlichen, synthetischen oder mineralischen Fasern oder deren Gemischen für den technischen Bereich sowie für die Sektoren Sanitär-, Haushalt- und Hygienevliesstofle, ferner zum Verfestigen von Papier, von Geweben aus natürlichen, synthetischen oder mineralischen Fasern oder deren Gemischen und zum Verkleben von Folien aus natürlichen oder synthetischen Materialien.

## Patentansprüche (Patentansprüche für folgende(n) Vertragsstaat(en): AT)

1. Verfahren zur Herstellung von formaldehydfreien wäßrigen Kunststoff-dispersionen auf Basis eines vernetzbaren Polymerisats aus ethylenisch ungesättigten Monomeren mit einem Gehalt an N-Methylolamid und/oder N-Methyloletheramidgruppen, dadurch gekennzeichnet, daß man in üblicher Weise hergestellte wäßrige, vernetzbare und N-Methylolamid- und/oder N-Methyloletheramidgruppen enthaltende Polymerisatdispersion mit bis 10 Gew.-%, bezogen auf die Dispersion, einer Verbindung der Formel I, 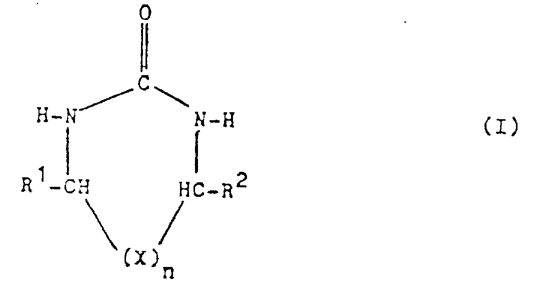
worin n = 0 oder 1,
X = Sauerstoff, -CH₂-, -CH(R)- oder -N(R)-, wobei R für (C₁-C₄)-Alkyl oder (C₁-C₄)- Alkylol steht,
und
R₁, R₂ = H oder OH bedeutet.
mischt, wobei sie übliche Säuren und/oder Säurespender enthalten und ihr Feststoffgehalt 15 bis 65 Gew.-%, bezogen auf die wäßrige Dispersion, beträgt, daß das vernetzbare Polymerisat übliche Grundmoleküleinheiten mit zur Vernetzung fähigen N-Methylolamid- und/oder N-Methyloletheramidgruppen enthält und daß das vernetzbare Polymerisat N-Methylolacrylamideinheiten und/oder N-(Isobutoxy-methyl)acrylamideinheiten enthält.

2. Verfahren nach Anspruch 1, dadurch gekennzeichnet, daß die Kunststoff-dispersionen organische Säuren und/oder organische Säurespender enthalten.

3. Verfahren nach Anspruch 1 oder 2, dadurch gekennzeichnet, daß man die Polymerisatdispersion mit 0,15 bis 6 Gew.-%, bezogen auf die wäßrige Dispersion, einer Verbindung der Formel I vermischt.

4. Verfahren nach Anspruch 1,2 oder 3, dadurch gekennzeichnet, daß in Formel I n = 0 und R¹, R = H bedeuten

5. Verfahren nach Ansprüchen 1 bis 4, dadurch gekennzeichnet, daß das vernetzbare Polymerisat Grundmoleküleinheiten von ethylenisch ungesättigten Monomeren aus der Gruppe Vinylacetat, Vinylpropionat, Acrylsäureester, Maleinsäuremonoester, Maleinsäurediester, Styrol, Ethylen, Vinylester langkettiger linearer oder verzweigter Carbonsäuren, Vinylchlorid, Acrylamid, Acrylsäure, Acrylnitril, Methacrylsäure, Methacrylamid, deren mögliche Kombinationen zu Copolymerisaten oder Terpolymerisaten enthält.

6. Verfahren nach Ansprüchen 1 bis 5, dadurch gekennzeichnet, daß man die Verbindung der Formel 1 als alkoholische Lösung zusetzt.

7. Verwendung der formaldehyfreien wäßrigen Kunststoffdispersionen, hergestellt nach Ansprüchen 1 bis 6, zum Verkleben, Tränken, Verfestigen und Beschichten von Materialien verschiedenster Art.

8. Verwendung der formaldehydfreien wäßrigen Kunststoffdispersion, hergestellt nach Ansprüchen 1 bis 6, zum Verfestigen von non wovens aus natürlichen, synthetischen oder mineralischen Fasern oder deren Gemischen für den technischen Bereich sowie für die Sektoren Sanitär-, Haushalt- und Hygienevliesstoffe, ferner zum Verfestigen von Papier, von Geweben aus natürlichen, synthetischen oder mineralischen Fasern oder deren Gemischen und zum Verkleben von Folien aus natürlichen oder synthetischen Materialien.

## Claims (Claims for the following Contracting State(s): BE, CH, DE, FR, GB, IT, NL, SE)

1. Formaldehyde-free aqueous plastics dispersions based on a crosslinkable polymer of ethylenically unsaturated monomers containing N-methylolamide and/or N-methylol ether-amide groups, characterized in that the dispersions contain up to 10 % by weight, relative to the dispersion of a compound of the formula I 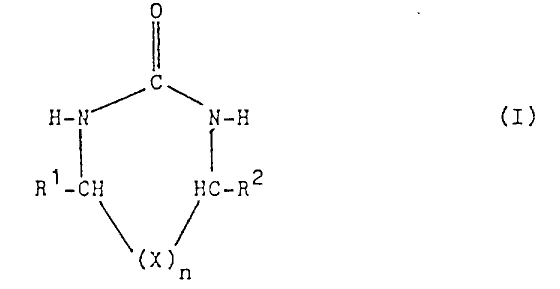
in which n = 0 or 1,
X = oxygen, -CH₂-, -CH(R)- or -N(R)-, R representing (C₁-C₄)-alkyl or (C₁-C₄)-alkylol, and
R¹, R = H or OH,
that they contain customary acids and/or acid donors and their solids content is 15 to 65 % by weight, relative to the aqueous dispersion, that the crosslinkable polymer contains customary basic molecule components possessing N-methylolamide groups and/or N-methylol ether-amide groups capable of crosslinking, and that the crosslinkable polymer contains N-methylolacrylamide units and/or N-(isobutoxymethyl)acrylamide units as the component capable of crosslinking.

2. Plastics dispersions as claimed in claim 1, characterized in that they contain organic acids and/or organic acid donors.

3. Plastics dispersions as claimed in claim 1 or 2, characterized in that they contain 0,15 to 6 % by weight, relative to the aqueous dispersion, of a compound of the formula I.

4. Plastics dispersions as claimed in claim 1, 2 or 3, characterized in that they contain a compound of the formula I in which n denotes 0 and R¹ and R denote H.

5. Plastics dispersions as claimed in claims 1 to 4, characterized in that the crosslinkable polymer contains basic molecule units of ethylenically unsaturated monomers from the group comprising vinyl acetate, vinyl propionate, acrylic acid esters, maleic acid monoesters, maleic acid diesters, styrene, ethylene, vinyl esters of long-chain linear or branched carboxylic acids, vinyl chloride, acrylamide, acrylic acid, acrylonitrile, methacrylic acid and methacrylamide, and their possible combinations to form copolymers or terpolymers.

6. Process for the preparation of formaldehyde-free aqueous plastics dispersions based on a crosslinkable polymer of ethylenically unsaturated monomers containing N-methylolamide and/or N-methylol ether-amide groups, as claimed in claims 1 to 5, characterized in that aqueous crosslinkable polymer dispersions containing N-methylolamide and/or N-methylol ether-amide groups, prepared in the usual manner, are mixed with a compound of the formula I.

7. Process as claimed in claim 6, characterized in that the compound of the formula I is added as an alcoholic solution.

8. Use of the polymer dispersions as claimed in claims 1 to 5 for the glueing, impregnation, strengthening and coating of the widest variety of materials.

9. Use of the polymer dispersions as claimed in claims 1 to 5 for the strengthening of nonwovens made of natural, synthetic or mineral fibers, or mixtures thereof, for the technical sector and for bonded fabrics in the health, household and hygiene sectors, and also for the strengthening of paper and of woven fabrics made of natural, synthetic or mineral fibers, or mixtures thereof, and for the glueing of films made of natural or synthetic materials.

## Claims (Claims for the following Contracting State(s): AT)

1. Process for the preparation of formaldehyde-free aqueous plastics dispersions based on a crosslinkable polymer of ethylenically unsaturated monomers containing N-methylolamide and/or N-methylol ether-amide groups, characterized in that aqueous crosslinkable polymer dispersions containing N-methylolamide and/or N-methylol ether-amide groups, prepared in the usual manner, are mixed with up to 10 % by weight, relative to the dispersion, of a compound of the formula I, 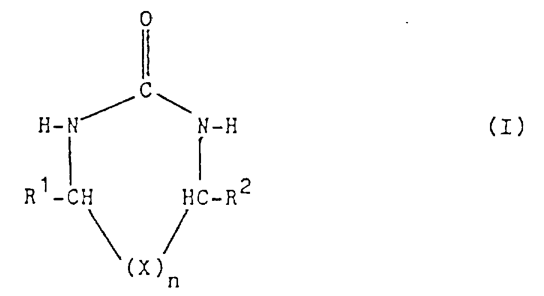
in which n = 0 or 1,
X = oxygen, -CH₂-, -CH(R)- or -N(R)-, R representing (C₁-C₄)-alkyl or (C₁-C₄)-alkylol, and
R¹, R = H or OH,
whereby they contain customary acids and/or acid donors and their solids content is 15 to 65 % by weight, relative to the aqueous dispersion, that the crosslinkable polymer contains customary basic molecule components possessing N-methylolamide groups and/or N-methylol ether-amide groups capable of crosslinking, and that the crosslinkable polymer contains N-methylolacrylamide units and/or N-(isobutoxymethyl)acrylamide units.

2. Process as claimed in claim 1, characterized in that the plastics dispersions contain organic acids and/or organic acid donors.

3. Process as claimed in claim 1 or 2, characterized in that the polymer dispersion is mixed with 0.15 to 6 % by weight, relative to the aqueous dispersion, of a compound of the formula I.

4. Process claimed in claim 1, 2 or 3, characterized in that, in formula I, n denotes 0 and R¹ and R denote H.

5. Process as claimed in claims 1 to 4, characterized in that the crosslinkable polymer contains basic molecule units of ethylenically unsaturated monomers from the group comprising vinyl acetate, vinyl propionate, acrylic acid esters, maleic acid monoesters, maleic acid diesters, styrene, ethylene, vinyl esters of long-chain linear or branched carboxylic acids, vinyl chloride, acrylamide, acrylic acid, acrylonitrile, methacrylic acid and methacrylamide, and their possible combinations to form copolymers or terpolymers.

6. Process as claimed in claims 1 to 5, characterized in that the compound of the formula I is added as an alcoholic solution.

7. Use of the formaldehyde-free aqueous plastics dispersions, prepared as claimed in claims 1 to 6, for the glueing, impregnation, strengthening and coating of the widest variety of materials.

8. Use of the formaldehyde-free aqueous plastics dispersions, prepared as claimed in claims 1 to 6, for the strengthening of nonwovens made of natural, synthetic or mineral fibers, or mixtures thereof, for the technical sector and for bonded fabrics in the health, household and hygiene sectors, and also for the strengthening of paper and of woven fabrics made of natural, synthetic or mineral fibers, or mixtures thereof, and for the glueing of films made of natural or synthetic materials.

## Revendications (Revendications pour l'(les) Etat(s) contractant(s) suivant(s): BE, CH, DE, FR, GB, IT, LI, NL, SE)

1. Dispersions aqueuses de matières synthétiques exemptes de formaldéhyde, à base d'un polymère réticulable formé à partir de monomères insaturés éthyléniques et contenant des groupes N-méthylolamide et/ou N-méthylolétheramide, dispersions caractérisées en ce qu'elles contiennent jusqu'à 10 % en poids, par rapport à la dispersion, d'un composé de formule I, 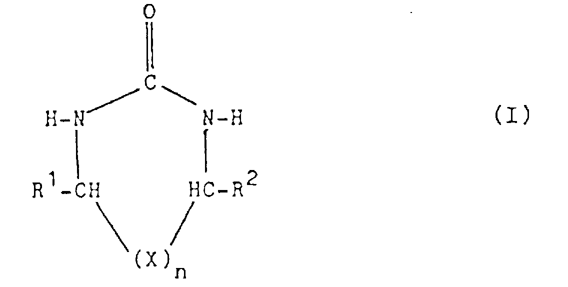
dans laquelle n = 0 ou 1,
X = oxygène, -CH₂-, -CH(R)- ou -N(R)-, R représentant un groupe alkyle en C₁-C₄ ou un groupe alkylol en C₁-C₄ et,
R₁, R₂ = H ou OH,
en ce qu'elles contiennent des acides et/ou des dispensateurs d'acides usuels et leur teneur en matières solides est de 15 à 65 % en poids par rapport à la dispersion aqueuse, en ce que le polymère réticulable contient des unités de molécules de base présentant des groupes N-méthylolamide et/ou N-méthylolétheramide aptes à la réticulation et en ce que le polymère réticulable contient des unités N-méthylolacrylamide et/ou des unités N-(isobutoxyméthyl)acrylamide en tant que constituants aptes à la réticulation.

2. Dispersions de matières synthétiques selon la revendication 1, caractérisées en ce qu'elles contiennent des acides organiques et/ou des dispensateurs d'acides organiques.

3. Dispersions de matières synthétiques selon la revendication 1 ou 2, caractérisées en ce qu'elles contiennent 0,15 à 6 % en poids, par rapport à la dispersion aqueuse, d'un composé de formule I.

4. Dispersions de matières synthétiques selon la revendication 1, 2 ou 3, caractérisées en ce qu'elles contiennent un composé de formule I dans laquelle n = 0 et R₁, R₂ = H.

5. Dispersions de matières synthétiques selon les revendications 1 à 4, caractérisées en ce que le polymère réticulable contient des unités de molécules de base de monomères insaturés éthyléniques appartenant au groupe constitué par l'acétate de vinyle, le propionate de vinyle, les esters de l'acide acrylique, les monoesters de l'acide maléique, les diesters de l'acide maléique, le styrène, l'éhylène, les esters vinyliques d'acides carboxyliques à longue chaîne, linéaires ou ramifiés, le chlorure de vinyle, l'acrylamide, l'acide acrylique, l'acrylonitrile, l'acide méthacrylique, le méthacrylamide, leurs combinaisons possibles donnant des copolymères ou des terpolymères.

6. Procédé de préparation de dispersions aqueuses de matières synthétiques exemptes de formaldéhyde, à base d'un polymère réticulable formé à partir de monomères insaturés éthyléniques et contenant des groupes N-méthylolamide et/ou N-méthylolétheramide selon les revendications 1 à 5, caractérisé en ce qu'on mélange des dispersions de polymères produites de manière habituelle, aqueuses, réticulables et contenant des groupes N-méthylolamide et/ou N-méthylolétheramide, avec un composé de formule I.

7. Procédé selon la revendication 6, caractérisé en ce que l'on introduit le composé de formule I sous la forme d'une solution alcoolique.

8. Utilisation de la dispersion de polymère selon les revendications 1 à 5 pour le collage, l'imprégnation, la consolidation et l'enduction de matériaux de divers types.

9. Utilisation des dispersions de polymères selon les revendications 1 à 5 pour la consolidation de non-tissés obtenus à partir de fibres naturelles, synthétiques ou minérales ou de leurs mélanges pour le domaine industriel, ainsi que pour les secteurs de matières non tissées à usages sanitaire, domestique et hygiénique, également pour la consolidation du papier, des tissus en fibres naturelles, synthétiques ou minérales ou de leurs mélanges et pour le collage de feuilles en matériaux naturels ou synthétiques.

## Revendications (Revendications pour l'(les) Etat(s) contractant(s) suivant(s): AT)

1. Procédé de préparation de dispersions aqueuses de matières synthétiques exemptes de formaldéhyde, à base d'un polymère réticulable formé à partir de monomères insaturés éthyléniques et contenant des groupes N-méthylolamide et/ou N-méthylolétheramide, caractérisé en ce qu'on mélange des dispersions de polymères produites de manière habituelle, aqueuses, réticulables et contenant des groupes N-méthylolamide et/ou N-méthylolétheramide avec jusqu'à 10 % en poids, par à la dispersion, d'un composé de formule I, 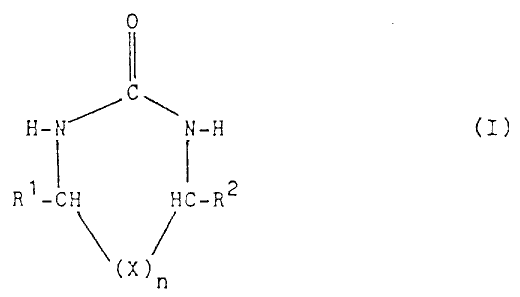
dans laquelle n = 0 ou 1,
X = oxygène, -CH₂-, -CH(R)- ou -N(R)-, R représentant un groupe alkyle en C₁-C₄ ou un groupe alkylol en C₁-C₄, et
R₁, R₂ = H ou OH,
ces dispersions contenant des acides et/ou des dispensateurs d'acides usuels et leur teneur en matières solides étant de 15 à 65 % en poids par rapport à la dispersion aqueuse, en ce que le polymère réticulable contient des unités de molécules de base présentant des groupes N-méthylolamide et/ou N-méthylolétheramide aptes à la réticulation et en ce que le polymère réticulable contient des unités N-méthylolacrylamide et/ou des unités N-(isobutoxyméthyl)acrylamide.

2. Procédé selon la revendication 1, caractérisé en ce que les dispersions de matières synthétiques contiennent des acides organiques et/ou des dispensateurs d'acides organiques.

3. Procédé selon la revendication 1 ou 2, caractérisé en ce que l'on mélange la dispersion de polymère avec 0,15 à 6 % en poids, par rapport à la dispersion aqueuse, d'un composé de formule I.

4. Procédé selon la revendication 1, 2 ou 3, caractérisé en ce que dans la formule I n = O et R₁, R₂ = H.

5. Procédé selon les revendications 1 à 4, caractérisé en ce que le polymère réticulable contient des unités de molécules de base de monomères insaturés éthyléniques appartenant au groupe constitué par l'acétate de vinyle, le propionate de vinyle, les esters de l'acide acrylique, les monoesters de l'acide maléique, les diesters de l'acide maléique, le styrène, l'éthylène, les esters vinyliques d'acides carboxyliques à longue chaîne, linéaires ou ramifiés, le chlorure de vinyle, l'acrylamide, l'acide acrylique, l'acrylonitrile, l'acide méthacrylique, le méthacrylamide, leurs combinaisons possibles donnant des copolymères ou des terpolymères.

6. Procédé selon les revendications 1 à 5, caractérisé en ce que l'on introduit le composé de formule I sous la forme d'une solution alcoolique.

7. Utilisation des dispersions aqueuses de matières synthétiques exemptes de formaldéhyde, préparées selon les revendications 1 à 6, pour le collage, l'imprégnation, la consolidation et l'enduction de matériaux de divers types.

8. Utilisation des dispersions aqueuses de matières synthétiques exemptes de formaldéhyde, préparées selon les revendications 1 à 6, pour la consolidation de non-tissés obtenus à partir de fibres naturelles, synthétiques ou minérales ou de leurs mélanges pour le domaine industriel, ainsi que pour les secteurs des matières non tissées à usages sanitaire, domestique et hygiénique, également pour la consolidation du papier, des tissus en fibres naturelles, synthétiques ou minérales ou de leurs mélanges et pour le collage de feuilles en matériaux naturels ou synthétiques.
